# EUROPÄISCHE PATENTANMELDUNG

(11) **EP 2 947 636 A2**
(43) Veröffentlichungstag der Anmeldung: **25.11.2015**
(21) Anmeldenummer: 15169036.9
(22) Anmeldetag: 22.05.2015
(51) Int. Cl.: G08G 1/09, G08G 1/0967, G01C 21/34

(54) **VERFAHREN UND ANORDNUNG ZUR VERARBEITUNG VON INFORMATIONEN IN EINEM FAHRZEUGASSISTENZ- UND INFORMATIONSSYSTEM**

(30) Priorität: 22.05.2014 DE 102014209788
(71) Anmelder: TechniSat Digital GmbH, 54550 Daun (DE)
(72) Erfinder: Porstmann, Dipl.-Inf. (FH) Frank, 01705 Freital (DE); Kruse, Marco, 01159 Dresden (DE); Kahlenbach, Dipl.-Inf. (FH) Andreas, 01159 Dresden (DE); Ulbricht, Dipl. Medien-Inf. Dirk, 01099 Dresden (DE); Heinecke, Matthias, 39356 Oebisfelde-Weferlingen (DE)

(57) **Zusammenfassung**

Der Erfindung, welche ein Verfahren zur Verarbeitung von Informationen in einem Fahrzeugassistenz- und Informationssystem betrifft, liegt die Aufgabe zugrunde, ein Verfahren zur Verarbeitung von Informationen anzugeben, mit welchem eine zuverlässige Bereitstellung von Verkehrs- und Zusatzinformationen erreicht wird, insbesondere in Systemen, in welchen Informationen aus mehreren Teilinformationen zusammengesetzt werden müssen. Diese Aufgabe wird dadurch gelöst, dass mehrere Datenpools bereitgestellt werden, wobei der Empfang der ausgewählten Daten in einem Sammelpool, die Dekodierung der Daten in einem Dekodierpool und die Ausgabe der dekodierten Daten mittels mehrerer Anzeigepools der Datenpools erfolgt.

## Beschreibung

Die Erfindung betrifft ein Verfahren zur Verarbeitung von Informationen in einem Fahrzeugassistenz- und Informationssystem, bei welchem Daten zu Verkehrsinformationen mit ihren Ortsangaben vom Fahrzeugassistenz- und Informationssystem empfangen, dekodiert und ausgegeben werden, wobei eine Aufteilung der Erdoberfläche in Quadranten erfolgt und mindesten einer der Quadranten ausgewählt wird, wobei eine Ortsbestimmung durchführt wird und nur Daten mit einer Ortsangabe, welche in den ausgewählten Quadranten fällt zur, Dekodierung und Ausgabe ausgewählt werden.

Die Erfindung betrifft auch eine Anordnung zur Verarbeitung von Informationen in einem Fahrzeugassistenz- und Informationssystem, welche eine GPS-Antenne, eine Positionsbestimmungseinheit sowie eine Quadrant-Auswahleinheit zur Bestimmung eines aktuellen Standorts und zur Bestimmung eines aktuellen Quadranten umfasst, welche eine Satellitenantenne und einen Dekoder zum Empfang von Verkehrsinformationen mit ihren Ortsangaben umfasst und welche einen Filter zur Selektion der empfangenen Verkehrsinformationen mittels ihrer Ortsangaben und des bestimmten Quadranten beinhaltet.

Fahrzeugassistenz- und Informationssysteme können ihre Daten unter Nutzung verschiedener Datenübertragungsstandards empfangen. Üblicherweise werden derartige terrestrisch oder über Satellit empfangenen Daten in diesen Systemen verarbeitet, also beispielsweise dekodiert, und dem Nutzer des Fahrzeuges optisch mittels eines Displays oder akustisch als eine Tonausgabe bereitgestellt.

Für die Datenübertragung kann in Deutschland der UKW-Rundfunk im Bereich zwischen 87,5 MHz und 108,0 MHz oder in anderen Ländern hiervon abweichende Bereiche oder nur Teilbereiche genutzt werden. Hierbei können Verkehrsnachrichten ohne Beeinflussung des hörbaren Bereichs unter Nutzung des digitalen TMC-Verfahrens (Traffic Message Channel) übertragen werden. Neben dieser Datenübertragung können Daten auch im digitalen Übertragungsstandard Digital Audio Broadcasting (DAB) übertragen werden.

Übertragungsstandards wie GPRS, UMTS, WLAN oder Nachrichtendienst-Systeme (engl. Messaging-Systeme), wie SMS oder MMS, können ebenfalls zur Übertragung von Daten für ein Fahrzeugassistenz- und Informationssystem genutzt werden.

Darüber hinaus werden Datenübertragungsstandards im Bereich der Satellitenkommunikation angeboten, um Gebiete mit einer weitläufigen Ausdehnung mit Informationen versorgen zu können. Ein Beispiel hierfür ist das in den USA und Kanada angebotene Sirius-Satellitenradio, welches mit einem entsprechend ausgerüsteten Autoradio in einem Fahrzeug empfangen werden kann.

Die von Fahrzeugassistenz- und Informationssystemen für einen Nutzer oder Führer eines Kraftfahrzeuges bereitgestellten Informationen können unter anderem Verkehrsmeldungen, Wetterinformationen, Tankstellenmeldungen und viele andere Informationen sein.

Derartige Informationen sollen den Fahrzeugführer beispielsweise bei der Planung einer Fahrtroute unterstützen und auch bei Einschränkungen auf dem geplanten Fahrweg durch Baustellen, Staus oder andere Behinderungen dafür sorgen, dass der Fahrer sein Ziel schnellstmöglich und ressourcenschonend erreicht.

Zusätzlich können auch routenbezogene Informationen zu Tankstellen, Restaurants, Hotels, Ausflugszielen, dem Wetter und vielem mehr zur Verfügung gestellt werden.

Bei der Verarbeitung von Daten von Fahrzeugassistenz- und Informationssystemen kann es notwendig werden, komplette Datenpakete zu verarbeiten, um dem Nutzer einen konsistenten Informationsstand zu präsentieren.

Beispielsweise kann es bei der Nutzung des Sirius-Protokolls vorkommen, dass eine vollständige Nachricht aus mehreren separaten Datenpaketen oder Teilnachrichten zusammengesetzt werden muss, da die vollständige Nachricht aus einer ersten Teilnachricht und einer zweiten Teilnachricht, welche eine Aktualisierung der ersten Teilnachricht sein kann, besteht. Eine Dekodierung und Anzeige der ersten Nachricht würde zur Folge haben, dass eine falsche oder unvollständige Nachricht angezeigt wird.

Aus der DE 699 28 484 T2 sind ein Verfahren und eine Vorrichtung zum Verwenden von Echtzeitverkehrsfunkmeldungen mit Navigationssystemen bekannt. Hierbei werden regional zur Verfügung gestellte Berichte über Verkehrs- und Straßenzustandsinformationen mittels eines geeigneten mobilen Empfängers in einem Fahrzeug empfangen, dekodiert und dem Fahrzeugführer zur Verfügung gestellt.

Das Verfahren nutzt hierfür beispielsweise die im RDS-TMC-System spezifischen Orten längs der Straße zugewiesenen Ortsbezugscodes, welche zu Kreuzungen, Verkehrsknotenpunkten oder Straßenabschnitten zugehörig sind. Vorgesehen ist auch, sogenannte Parzellen von Ortsbezugsdatensätzen zu bilden und einen vorhergehenden sowie einen nachfolgenden Ortsbezugsdatensatz zu bestimmen, um ein Ausmaß des gemeldeten Verkehrszustands zu bestimmen.

Aus der EP 2 386 830 A2 sind eine Vorrichtung und ein Verfahren zum Anpassen einer berechneten Route an aktuelle Verkehrsereignisse in einem Navigationsgerät bekannt. In diesem Navigationsgerät ist ein Datenmanager vorgesehen, welcher empfangene Verkehrsmeldungen filtert und bewertet (gewichtet) und von einem eingangsseitigen Meldungspool in einen Pufferpool überträgt. So kann sichergestellt werden, dass nur Verkehrsmeldungen in den Arbeitsspeicher übertragen werden, welche zu dem Gebiet gehören, das momentan vom Fahrzeug befahren wird.

Vorgesehen ist außerdem, dass der Datenmanager die zeitlichen Abstände zwischen den Aktualisierungen der Datenpools steuert. Dies geschieht in Abhängigkeit der Höhe des aktuellen Verkehrsaufkommens und ihrer ermittelten Entfernung zum Fahrzeug bzw. Navigationsgerät.

Die Speicherung der Verkehrsmeldungen in einem Pufferpool hat auch den Vorteil, dass auch bei einer Störung des Übertragungskanals Verkehrsmeldungen zur Überprüfung und Anpassung oder Revision einer berechneten Route zur Verfügung stehen.

Ein Nachteil des Standes der Technik besteht darin, dass bei Lösungen ohne einen Pufferpool bei einem Auftreten von Störungen keine Daten zur Anzeige oder Routenberechnung zur Verfügung stehen. Ein weiterer Nachteil besteht darin, dass die Daten nach Empfang und Dekodierung sofort angezeigt werden. Bei der Verwendung von Protokollen, welche Daten in Teilnachrichten bereitstellen, welche erst nach mehreren kompletten Durchläufen (Karussell) vollständig hergestellt sind, führt die sofortige Ausgabe der Daten möglicherweise zu einer unvollständigen oder falschen Anzeige. Gleiches gilt, wenn Daten erst nach dem Empfang einer Aktualisierung einen aktuellen und vollständigen Datensatz bilden.

Die Aufgabe der Erfindung besteht somit darin, ein Verfahren zur Verarbeitung von Informationen in einem Fahrzeugassistenz- und Informationssystem anzugeben, mit welchem eine zuverlässige Bereitstellung von Verkehrs- und Zusatzinformationen erreicht wird, insbesondere in Systemen, in welchen Informationen aus mehreren Teilinformationen zusammengesetzt werden müssen.

Gemäß der Erfindung wird die Aufgabe mit einem Verfahren der eingangs genannten Art dadurch gelöst, dass mehrere Datenpools bereitgestellt werden, wobei der Empfang der ausgewählten Daten in einem Sammelpool, die Dekodierung der Daten in einem Dekodierpool und die Ausgabe der dekodierten Daten mittels mehrerer Anzeigepools erfolgt.

Vorgesehen sind mehrere Datenpools, welche als Speicher oder Bereiche in einem Speicher realisiert werden können, wobei die Datenpools verschiedenen Funktionen zugeordnet sind. Somit können Daten, welche zu einem ausgewählten Quadranten A zugehörig sind, in einem sogenannten Sammelpool empfangen werden, während beispielsweise in einem zweiten Datenpool, einem sogenannten Dekodierpool, einem anderen Quadranten B zugehörige Daten dekodiert werden.

Vorgesehen ist außerdem mindestens ein weiterer als Anzeigepool bezeichneter Datenpool. Dieser beinhaltet dekodierte Daten zu einem durch das Verfahren ausgewählten Quadranten. Diese Daten werden entweder für einen Nutzer zur Anzeige gebracht oder stehen für eine Routenplanung zur Verfügung.

In einer Ausgestaltung des Verfahrens ist vorgesehen, dass Daten zwischen den Datenpools kopiert oder ausgetauscht werden.

Zwischen den bereitgestellten Datenpools können die Daten eines kompletten Datensatzes eines Quadranten kopiert werden. Ist das Ende des Datenempfangs zu einem Quadranten erreicht, können beispielsweise die Daten aus dem Sammelpool in den Dekodierpool kopiert werden. Alternativ ist vorgesehen, die Daten zwischen den Datenpools zu tauschen. Dies kann programmtechnisch einfach mittels sogenannter Zeiger, welche einen Adressbereich in einem Speicher adressieren, erfolgen. Dieser Tausch der Datensätze hat den Vorteil, dass beide Datensätze vollständig erhalten bleiben und somit beispielsweise eine Aktualisierung eines dieser Datensätze möglich ist. Derartige Aktualisierungen sind beispielsweise im Sirius-Protokoll vorgesehen.

In einer anderen Ausführung ist vorgesehen, dass vier Anzeigepools bereitgestellt werden, wobei jeder Anzeigepool zu einem Quadranten A, B, C und D zugehörige Daten beinhaltet.

Bereiche auf der Erdoberfläche können in sogenannte Quadranten unterteilt werden, wie beispielsweise beim Sirius-Protokoll. Diese Quadranten werden auch als Märkte (engl. Markets) bezeichnet.

Durch das Verfahren wird mittels empfangener GPS-Koordinaten der aktuelle Quadrant ausgewählt. Alternativ können neben dem aktuellen Quadranten zusätzlich auch benachbarte Quadranten ausgewählt werden, beispielsweise in einer Matrix aus 2 mal 2 Quadranten. Vorgesehen ist, mittels eines Filters nur die zu den ausgewählten Quadranten zugehörigen Nachrichten zu dekodieren und anzuzeigen.

Werden mehrere Quadranten gleichzeitig ausgewählt (z. B. vier), ist es vorteilhaft, eine Anzahl von Anzeigepools bereitzustellen, welche der Anzahl der ausgewählten Quadranten entspricht (z. B. vier). Somit stehen die Daten aller vier Quadranten A, B, C und D gleichzeitig zur Ausgabe zur Verfügung.

In einer anderen Ausführung ist vorgesehen, dass die Auswahl der Quadranten derart erfolgt, dass diejenigen vier Quadranten ausgewählt werden, welche zur bestimmten aktuellen Position den geringsten Abstand aufweisen.

Das Verfahren kann einen Quadranten, beispielsweise den "aktuellen", in welchem sich das System gerade befindet, zur Verarbeitung von Daten auswählen. Eine andere Möglichkeit besteht darin, benachbarte Quadranten ebenfalls auszuwählen und deren Daten zu verarbeiten. Somit stehen vor einem Übergang von einem zum anderen Quadranten bereits frühzeitig notwendige Verkehrsinformationen zur Verfügung. Eine Auswahl kann beispielsweise bei vier Quadranten in der Form einer 2 mal 2 Matrix erfolgen.

In einer anderen Ausführungsform ist vorgesehen, dass eine Ausgabe oder Anzeige der Daten durch die Anzeigepools, eine Dekodierung der Daten im Dekodierpool und ein Empfang von Daten im Sammelpool zeitgleich und unabhängig voneinander erfolgen.

Die erfindungsgemäße Bereitstellung mehrerer unterschiedlicher Datenpools ermöglicht es, zeitgleich verschiedene Verfahrensschritte bei der Bereitstellung der Informationen an den Nutzer ablaufen zu lassen. So kann während des Empfangs von Daten zu einem Quadranten A bereits ein Dekodiervorgang von Daten eines zuvor empfangenen Quadranten B durchgeführt werden. Alternativ können fertig dekodierte Daten des Quadranten B in den entsprechenden Anzeigepool geschrieben werden, während Daten zum Quadranten D empfangen werden.

Gemäß der Erfindung wird die Aufgabe mit einer Anordnung der eingangs genannten Art dadurch gelöst, dass ein Poolmanager zur Steuerung eines Empfangs, einer Dekodierung und einer Anzeige der Daten vorgesehen ist, welcher mit einem Sammelpool zum Empfang der Daten, einem Dekodierpool zur Dekodierung der empfangenen Daten und einem Anzeigepool zur Anzeige der Daten verbunden ist.

Zur Umsetzung des Verfahrens stellt die Anordnung mehrere Datenpools bereit, welche mit einem Poolmanager verbunden sind. Dieser Poolmanager steuert sowohl den Datenaustausch zwischen den verschiedenen Datenpools als auch die Funktionen der Datenpools selbst, wie Empfang, Dekodierung oder Anzeige von Daten.

In einer Ausführung der Anordnung ist vorgesehen, dass der Poolmanager mit vier Anzeigepools verbundenen ist, welche jeweils Daten zu verschiedenen ausgewählten Quadranten A, B, C und D beinhalten und zur Anzeige bringen.

Werden beispielhaft vier Quadranten durch das Verfahren ausgewählt, ist vorgesehen, vier Anzeigepools zur Verfügung zu stellen, in welchen die dekodierten Daten der Quadranten A, B, C und D gespeichert werden. Diese Daten können sowohl nacheinander als auch gleichzeitig, beispielsweise mittels eines Displays, angezeigt werden.

In einer Ausgestaltung der Anordnung ist vorgesehen, dass mehrere Sammelpools und/oder mehrere Dekodierpools mit dem Poolmanager zur parallelen Verarbeitung der Daten der Quadranten verbunden sind.

Die Erfindung sieht vor, mehrere Sammelpools bereitzustellen. Derart ist es möglich, Daten zu zwei verschiedenen Quadranten A und B gleichzeitig zu empfangen. Weiterhin können zwei Dekodierpools zur nachfolgenden Dekodierung der Daten der Quadranten A und B bereitgestellt werden. In einem besonderen Fall entspricht die Anzahl der Anzeigepools der Anzahl der Dekodierpools und der Anzahl der Sammelpools.

Die Erfindung soll nachfolgend anhand einiger Ausführungsbeispiele näher erläutert werden. In den zugehörigen Zeichnungen zeigt
- Fig. 1: ein Blockschaltbild eines Fahrzeugassistenz- und Informationssystems zur Umsetzung des Verfahrens,
- Fig. 2: ein Blockschaltbild einer Anordnung zur Umsetzung des Verfahrens,
- Fig. 3: ein Beispiel zum Zusammenwirken der Datenpools in einem ersten Zustand (Normalzustand),
- Fig. 4: ein Beispiel zum Zusammenwirken der Datenpools in einem Zustand, in welchem die fertig dekodierten Daten vorliegen,
- Fig. 5: ein Beispiel zum Zusammenwirken der Datenpools in einem Zustand, in welchem Daten zwischen den Datenpools getauscht werden,
- Fig. 6: ein Beispiel zum Zusammenwirken der Datenpools in einem weiteren Zustand, in welchem Daten aus einem Datenpool in einen anderen Datenpool kopiert werden und
- Fig. 7: eine Darstellung der Übertragung der Daten nach dem Sirius-Protokoll.

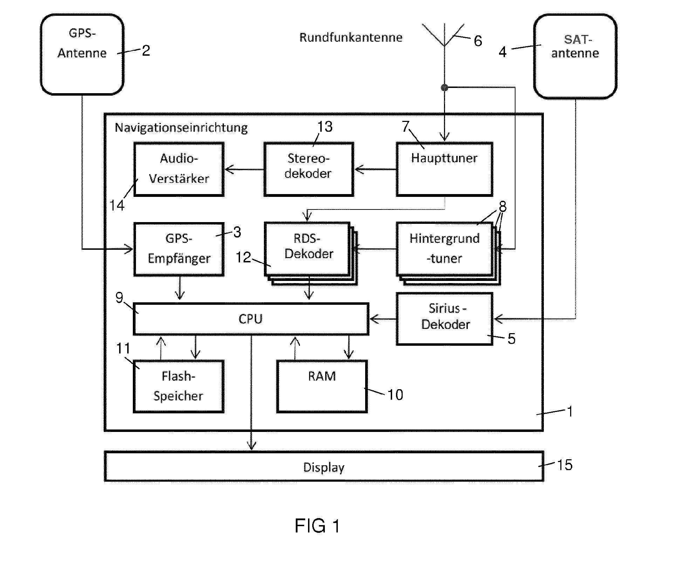

Die Figur 1 zeigt ein Blockschaltbild eines Fahrzeugassistenz- und Informationssystems, ausgebildet als eine Navigationseinrichtung 1. In dieser Navigationseinrichtung 1 läuft das beschriebene Verfahren ab. Die Navigationseinrichtung 1 weist einen GPS-Empfänger 3 auf, welcher mit einer externen GPS-Antenne 2 verbunden ist. Weiterhin sind ein Haupttuner 7 und mehrere Hintergrundtuner 8 zum Empfang von Rundfunksignalen vorgesehen, welche mit einer gemeinsamen Rundfunkantenne 6 verbunden sein können. Alternativ dazu kann nur ein Hintergrundtuner vorgesehen sein.

Die Navigationseinrichtung 1 verfügt weiterhin über einen Dekoder, welcher beispielsweise ein Sirius-Dekoder 5 sein kann und mit einer extern angeordneten Satellitenantenne 4 (SAT-Antenne) verbunden ist. Die empfangenen und zur Anzeige gebrachten Verkehrsmeldungen werden beispielsweise über diesen Sirius-Dekoder 5 empfangen.

Zur Verarbeitung der Daten weist die Navigationseinrichtung 1 einen Prozessor 9 auf, welcher mindestens mit einem RAM 10 und einem Flashspeicher 11 verbunden ist. Der Prozessor 9 ist eingangsseitig mit dem GPS Empfänger 3, mehreren RDS-Dekodern 12 und dem Sirius-Dekoder 5 verbunden. Die RDS-Dekoder 12 weisen je einen Eingang zur Verbindung mit den Hintergrundtunern 8 und dem Haupttuner 7 auf. Weiterhin ist in der Navigationseinrichtung 1 ein Stereo-Dekoder 13 angeordnet, welcher eingangsseitig mit dem Haupttuner 7 verbunden ist, und ausgangsseitig mit einem Audioverstärker 14, welcher ein Audio-Ausgangssignal bereitstellt, verbunden ist.

Der Prozessor 9 steuert den Ablauf des erfindungsgemäßen Verfahrens. Die im Verfahrensablauf genutzten Datenpools können als Speicherbereiche im RAM 10 oder Flash-Speicher 11 bereitgestellt werden.

Zur visuellen Darstellung der verarbeiteten Daten, beispielsweise für den Nutzer eines Fahrzeuges, ist der Prozessor 9 mit einem extern angeordneten Display 15 verbunden.

In Systemen zur Übertragung von Informationen an ein Fahrzeugassistenz- und Informationssystem ist es notwendig, beispielsweise eine Verkehrsnachricht mit einer Information zu versehen, welche es einem auswertenden System ermöglicht, die Verkehrsnachricht einem bestimmten Ort zuzuordnen.

Dies erfolgt meist mittels Informationen, wie einem Ländercode, einer Ortsdatenbanknummer und/oder einem Ortscode bei einer Übertragung mittels eines RDS-TMC-Protokolls.

Alternativ kann die Fläche um das System bzw. ein Fahrzeug herum, in welchem ein Fahrzeugassistenz- und Informationssystem installiert ist, in eine Anzahl von x Quadranten unterteilt werden. Eine derartige Unterteilung der Fläche ist beispielsweise beim Sirius-Protokoll vorgesehen, wobei die Quadranten hier als Märkte (engl. Markets) bezeichnet werden.

Bei der Verarbeitung der Informationen werden diese Quadranten durch sogenannte Datenpools repräsentiert, welche alle Daten beinhalten, die räumlich den jeweiligen Quadranten zugeordnet werden. Das System bedient sich dieser Datenpools, um die entsprechenden Daten zu verarbeiten und dem Nutzer zu präsentieren.

Eine Voraussetzung zur sicheren Funktionsweise des Systems ist, dass sich in diesen Datenpools vollständige und aktuelle Daten befinden.

Dieser Zustand ist aber bei der Nutzung des Sirius-Protokolls unter Umständen erst nach mehreren Durchläufen der sich wiederholenden Nachrichten erreicht. Mit Lösungen nach dem Stand der Technik kann es daher vorkommen, dass unvollständige oder fehlerhafte Nachrichten zur Anzeige gebracht werden.

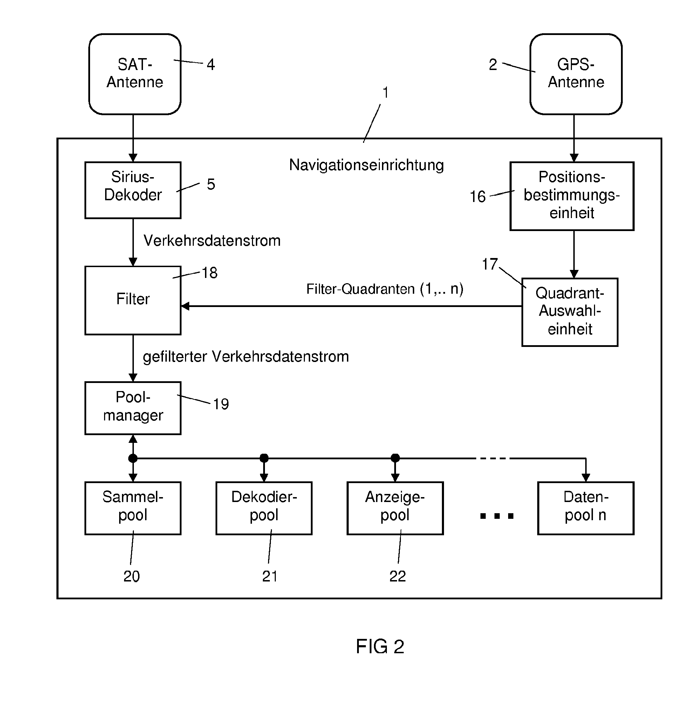

Es wird nun auf Figur 2 Bezug genommen.

Eine Verbesserung der Funktionsweise wird erfindungsgemäß dadurch erreicht, dass neben einem eingangsseitigen Sammelpool 20 und einem nachgeschalteten Dekodierpool 21 mehrerer Anzeigepools 22 vorgesehen sind.

Im Sammelpool 20 werden die zu einem Quadranten empfangenen Informationen gesammelt. Zum Dekodieren der Daten dient ein sogenannter Dekodierpool 21, in welchen die im Sammelpool 20 empfangenen Daten vor dem Start eines Dekodiervorgangs verschoben werden.

Ein Vorteil dieser Aufteilung in verschiedene Datenpools besteht darin, dass auch für den Fall, dass der Dekodiervorgang im Dekodierpool 21 einen potentiellen "Flaschenhals" darstellt, zeitgleich im Sammelpool 20 Daten zu einem anderen Quadranten empfangen werden können.

Sind alle Daten im Dekodierpool 21 dekodiert, werden diese an einen der Anzeigepools 22 übertragen oder die Daten werden gegenseitig ausgetauscht. Dabei ist vorgesehen, die dekodierten Daten zu einem Quadranten A mit einem Anzeigepool 22 zu tauschen, die dekodierten Daten zu einem Quadranten B mit einem anderen Anzeigepool 22 zu tauschen und so weiter. In einer Variante sind vier Anzeigepools vorgesehen, welche die dem System naheliegenden Quadranten verkörpern.

Die Anzeige der Verkehrs- und Zusatzinformationen kann wie üblich in einem Verkehrsmenü (engl. Traffic Menü) in Form einer Liste oder alternativ in einer Karte als Symbol erfolgen.

Die an die Anzeigepools 22 übertragenen Daten werden in diesen gespeichert und stehen jederzeit zur Ausgabe zur Verfügung, welche beispielsweise optisch mittels eines Displays erfolgen kann.

Erst, wenn die Daten eines der Anzeigepools 22 durch aktuelle Daten aus dem Dekodierpool 21 ersetzt wurden, werden die nun aktuellen Daten zur Anzeige gebracht.

So können beispielsweise die zu den vier Quadranten A, B, C, und D zugehörigen Daten nacheinander im Sammelpool 20 gesammelt, im Dekodierpool 21 dekodiert und an die Anzeigepools 22 übertragen werden, wobei die Reihenfolge des Empfangs der Daten und der Übertragung dekodierter Daten an die Anzeigepools 22 auch beliebig geändert sein kann (B, A, D, C).

Vorgesehen ist, nach dem Empfang eines kompletten Datenpakets im Sammelpool 20 durch das System, beispielsweise gesteuert mittels eines Poolmanagers 19, zu prüfen, ob alle Daten eines Datensatzes im Dekodierpool 21 dekodiert wurden. Ist dies der Fall, werden die Daten des Dekodierpools 21 mit den Daten des Sammelpools 20 getauscht. Nachfolgend wird ein neuer Dekodiervorgang gestartet.

Im Anschluss kann beispielsweise der Sammelpool 20 geleert und mit den Daten des Anzeigepools 22 des aktuell zu sammelnden Quadranten überschrieben werden. Dies geschieht unabhängig davon, ob alle Nachrichten des Dekodierpools 21 fertig dekodiert wurden. Somit kann einerseits sichergestellt werden, dass die Nachrichten im Sammelpool 20 (z. B. aktueller Inhalt aus A übernommen) immer aktuell sind, da auch bei einem unvollständigen Neuempfang der Daten ein vollständiger Datensatz vorliegt. Zum anderen ist eine Aktualisierung vorhandener Nachrichten möglich, da die vollständig dekodierte alte Nachricht in den Sammelpool 20 übernommen wurde und somit bei einem Austausch von Teilen dieser Nachricht ebenfalls ein vollständiger Datensatz vorliegt.

Nachfolgend werden beispielhaft verschiedene Zustände beim Zusammenwirken der Datenpools beschrieben.

In der Figur 2 ist eine Anordnung zur Umsetzung des Verfahrens in einer Darstellung gezeigt, welche nur die wesentlichen Baugruppen beinhaltet. Die Figur 2 zeigt ein mit einer Positionsbestimmungseinheit 16 ausgestattetes Fahrzeugassistenz- und Informationssystem 1. Zum Empfang von Positionsdaten ist die Positionsbestimmungseinheit 16 mit einer GPS-Antenne 2 und zur Übergabe der bestimmten Positionsdaten ist die Positionsbestimmungseinheit 16 mit einer Quadrant-Auswahleinheit 17 verbunden. Die Quadrant-Auswahleinheit 17 bestimmt den aktuellen sowie die umliegenden Quadranten und gibt das Ergebnis an einen Filter 18 weiter.

Der Filter 18 filtert aus einem Eingangsdatenstrom, erzeugt mittels eines entsprechenden Dekoders, welcher ein Sirius-Dekoder 5 sein kann und sein Eingangssignal von einer Satellitenantenne 4 (SAT-Antenne) empfängt, die den von der Quadrant-Auswahleinheit 17 bestimmten Quadranten zugehörigen Verkehrsmeldungen aus. Diese gefilterten Verkehrsmeldungen bilden den Ausgangsdatenstrom des Filters 18, welcher an einen Poolmanager 19 weitergeleitet wird.

Dieser Poolmanager 19 steuert mehrere Datenpools, hier beispielhaft dargestellt als Sammelpool 20, Dekodierpool 21, Anzeigepool 22 und Datenpool n. Dementsprechend können diese Datenpools ein Sammelpool 20, ein Dekodierpool 21 und mehrere Anzeigepools 22 sein. Alternativ dazu können auch mehrere Sammelpools und/oder mehrere Dekodierpools vorgesehen sein.

Der Poolmanager 19 steuert den Ablauf des erfindungsgemäßen Verfahrens beim Empfang, der Dekodierung und dem Austauschen der Daten zwischen den verschiedenen Datenpools.

Nachfolgend werden auszugsweise einige Beispiele verschiedener Zustände bzw. Abläufe, bezogen auf den Poolmanager 19 und die Datenpools 20, 21, 22, dargestellt.

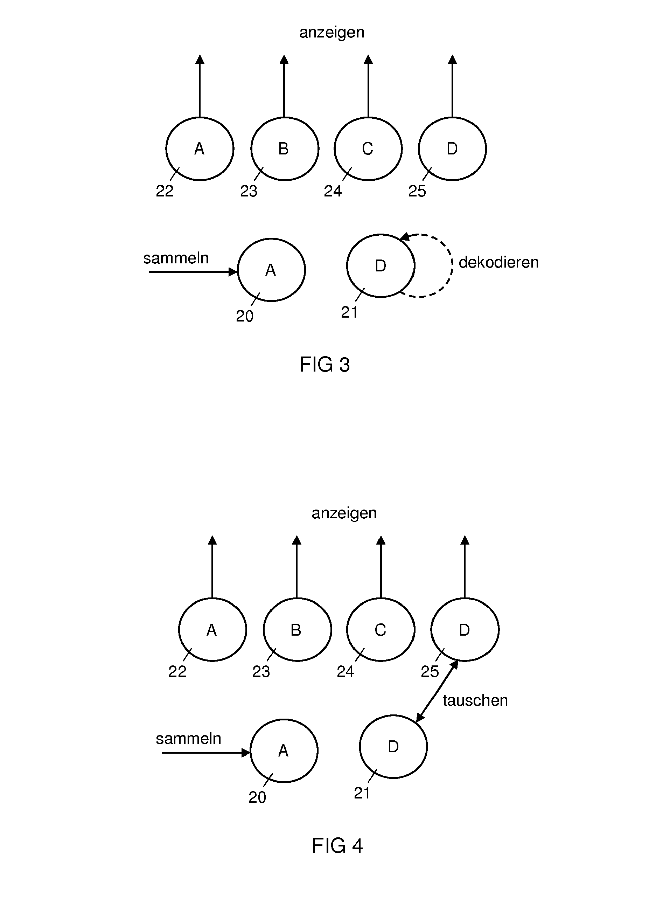

In der Figur 3 ist hierfür ein erstes Beispiel gezeigt. Die vier Anzeigepools 22, 23, 24, und 25 beinhalten, zu ihrem jeweiligen Quadranten zugehörig, je einen vollständigen wie auch dekodierten Datensatz und bringen die in diesen Datensätzen enthaltenen Informationen, beispielsweise nacheinander oder zeitgleich, auf einem Display 15 (vgl. Figur 1) zur Anzeige. Die Daten der Anzeigepools 22 bis 25 können alternativ oder zusätzlich dazu auch einem Navigationssystem zur Routenplanung oder Routenanpassung übergeben werden.

Zeitgleich werden in einem Sammelpool 20 Daten empfangen, beispielsweise Daten des zum Anzeigepool 22 gehörigen Quadranten A, während in einem Dekodierpool 21 Daten eines zum Anzeigenpool 25 gehörigen Quadranten D dekodiert werden.

Nachfolgend beziehen sich die Großbuchstaben A, B, C und D sowohl auf den ausgewählten Quadranten wie auch auf einen zu diesem Quadranten zugehörigen Datensatz.

Somit stehen auch für den Fall einer Störung bei der Datenübertragung immer Daten zur Anzeige oder Routenplanung zur Verfügung. Gleiches gilt auch, wenn der Dekodiervorgang im Dekodierpool 21 unverhältnismäßig viel Zeit benötigt.

In Figur 4 ist ein Beispiel für einen beendeten Dekodiervorgang eines kompletten Datensatzes des Quadranten D im Dekodierpool 21 gezeigt. Während die Daten der Quadranten A, B, C in den Anzeigepools 22, 23 und 24 zur Anzeige oder Ausgabe gebracht werden und der Sammelpool 20 Daten zum Quadranten A empfängt, wird der dekodierte Datensatz des Dekodierpools 21 mit dem im Anzeigepool 25 enthaltenen Datensatz des Quadranten D ausgetauscht.

Somit ist der Inhalt des Anzeigepools 25 aktualisiert worden und die aktualisierten Informationen können nachfolgend zur Anzeige oder Ausgabe gebracht werden. Diese Lösung stellt sicher, dass die Anzeigepools 22 bis 25 jederzeit Daten zur Ausgabe bereitstellen.

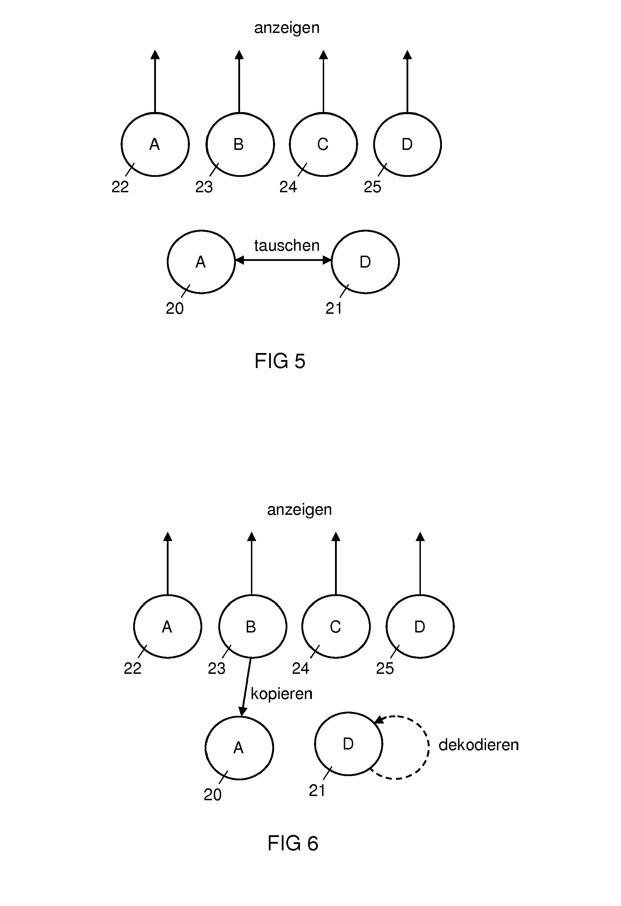

Im Beispiel in der Figur 5 ist ein weiterer Zustand gezeigt, bei welchem die in den Datensätzen A, B, C und D enthaltenen Informationen der Anzeigepools 22 bis 25 nacheinander oder zeitgleich auf einem Display zur Anzeige gebracht werden.

Zu einem Zeitpunkt, in welchem das Sammeln der Eingangsdaten zu Quadrant A im Sammelpool 20 abgeschlossen ist, wird gesteuert durch den Poolmanager 19 ein Datenaustausch zwischen dem Sammelpool 20 und dem Dekodierpool 21 vorgenommen.

In einer Ausführung ist vorgesehen, die Datenpools 20 bis 25 als Bereiche in einem Speicher 10 oder 11 (vgl. Figur 1) zu realisieren. Dadurch kann ein Datenaustausch programmtechnisch mittels Zeiger realisiert werden, was zu einer Beschleunigung des Verfahrensablaufs führt.

Im Beispiel der Figur 6 erfolgt eine Anzeige oder Ausgabe der Daten der Anzeigepools 22-25. Im Dekodierpool 21 werden Daten des Quadranten D dekodiert.

Zeitgleich erfolgt eine Übernahme der Daten aus dem Anzeigepool 23 in den Sammelpool 20, in welchem zuvor Daten zum Quadranten A gespeichert waren. Somit liegen im Sammelpool 20 vollständige Daten zum Quadranten B vor. Dieser Datensatz wird durch die nachfolgend zu empfangenen Eingangsdaten zum Quadranten B teilweise oder vollständig aktualisiert. Derart wird die im Sirius-Protokoll vorgesehene Möglichkeit des nur teilweisen Aktualisierens von Daten in einem Durchlauf (Karussell) für einen Datensatz unterstützt.

Das Sammeln und Dekodieren der Nachrichten erfolgt seriell, also immer nur für einen Quadranten.

In einer besonderen Realisierung der Erfindung ist vorgesehen, eine parallele Verarbeitung der Daten in einem Fahrzeugassistenz- und Informationssystem dadurch bereitzustellen, dass jedem Anzeigepool 22 bis 25 sowohl sein eigener Sammelpool 20 als auch sein eigener Dekodierpool 21 zur Verfügung gestellt wird.

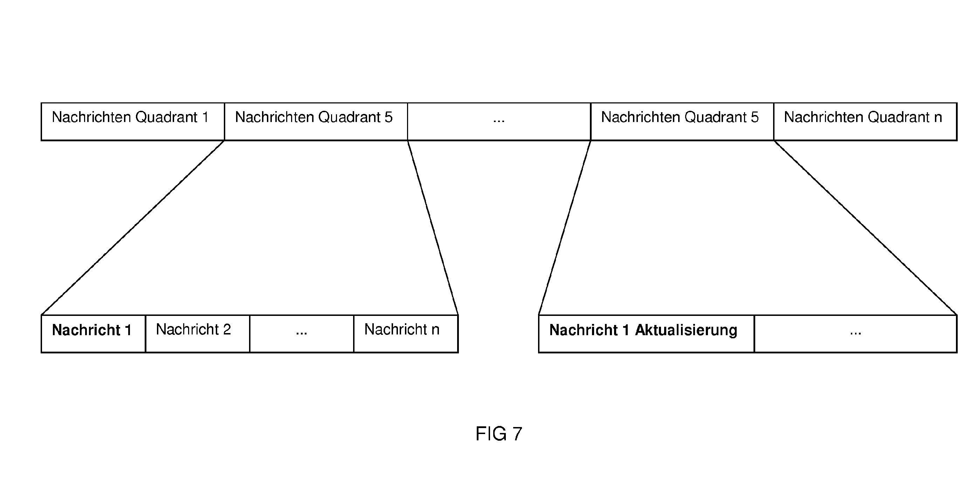

In der Figur 7 ist die Datenübertragung nach dem Sirius-Protokoll beispielhaft dargestellt. Die Figur zeigt, dass die Daten zu allen Quadranten aufeinander folgend gesendet werden.

Dem Datenpaket "Nachrichten Quadrant 1 ", welches einen zum ersten Quadranten gehörenden Datensatz repräsentiert, folgt das Datenpaket "Nachrichten Quadrant 5", welches einen zum fünften Quadranten gehörenden Datensatz repräsentiert. Dem Datenpaket "Nachrichten Quadrant 5" können weitere Datenpakete folgen, bevor ein weiteres Datenpaket "Nachrichten Quadrant 5" übertragen wird.

Ferner zeigt Figur 7 mehrere Nachrichten, die in dem zuerst übertragenen Datenpaket "Nachrichten Quadrant 5" und in dem später übertragenen Datenpaket "Nachrichten Quadrant 5" jeweils enthalten sind. Das zuerst übertragene Datenpaket "Nachrichten Quadrant 5" weist unter anderem eine als "Nachricht 1" bezeichnete Nachricht auf, während das später übertragene Datenpaket "Nachrichten Quadrant 5" unter anderem eine Aktualisierung dieser Nachricht ("Nachricht 1 Aktualisierung") aufweist. Somit wird die Nachricht 1 in einem ersten Datenpaket übertragen und mit einem zweiten Datenpaket aktualisiert.

Zwischen dem zuerst übertragenen Datenpaket "Nachrichten Quadrant 5" und dem später übertragenen Datenpaket "Nachrichten Quadrant 5" können beliebig viele Nachrichten für beliebig viele Quadranten übertragen werden. Die Nachricht 1 und die Aktualisierung dieser Nachricht müssen innerhalb eines Durchlaufs (Karussell) übertragen werden.

Eine Aktualisierung der Nachricht 1 bei einem späteren Durchlauf ist unabhängig von einem vorhergehenden Durchlauf möglich. Dazu wird die vorliegende Nachricht mit der später übertragenen Nachricht anhand eines Identifikationszeichens verglichen und bei festgestellten Unterschieden aktualisiert.

Das vorgestellte Verfahren kann durch den Austausch der Datensätze zwischen den Datenpools die zuvor empfangene Nachricht im vollen Umfang beibehalten und somit eine Aktualisierung, also das Ersetzen von Teilen oder Teilnachrichten, im Datensatz realisieren.

Zu bemerken ist, dass hier Quadranten und den Quadranten zugeordnete Datensätze betrachtet werden, welche der aktuellen Position am nächsten liegen. Ändert sich die aktuelle Position, können sich auch die betrachteten Quadranten und die zugehörigen Datensätze ändern. Das heißt, dass anstelle bisher betrachteter Quadranten, beispielsweise weil deren Entfernung zu der aktuellen Position zu groß geworden ist, andere Quadranten betrachtet werden. Dabei ist es insbesondere möglich, dass die den nicht mehr betrachteten Quadranten zugeordneten Datensätze gelöscht werden.

## Patentansprüche

1. Verfahren zur Verarbeitung von Informationen in einem Fahrzeugassistenz- und Informationssystem, bei welchem Daten zu Verkehrsinformationen mit ihren Ortsangaben vom Fahrzeugassistenz- und Informationssystem empfangen, dekodiert und ausgegeben werden, wobei eine Aufteilung der Erdoberfläche in Quadranten erfolgt und mindesten einer der Quadranten ausgewählt wird, wobei eine Ortsbestimmung durchführt wird und nur Daten mit einer Ortsangabe, welche in den ausgewählten Quadranten fällt, zur Dekodierung und Ausgabe ausgewählt werden, **dadurch gekennzeichnet, das** mehrere Datenpools bereitgestellt werden, wobei der Empfang der ausgewählten Daten in einem Sammelpool (20), die Dekodierung der Daten in einem Dekodierpool (21) und die Ausgabe der dekodierten Daten mittels mehrerer Anzeigepools (22) der Datenpools erfolgt.

2. Verfahren nach Anspruch 1, **dadurch gekennzeichnet, dass** Daten zwischen den Datenpools (20, 21, 22) kopiert oder ausgetauscht werden.

3. Verfahren nach Anspruch 1 oder 2, **dadurch gekennzeichnet, dass** vier Anzeigepools (22, 23, 24, 25) bereitgestellt werden, wobei jeder der Anzeigepools (22, 23, 24, 25) zu einem Quadranten A, B, C, D zugehörige Daten beinhaltet.

4. Verfahren nach einem der Ansprüche 1 bis 3, **dadurch gekennzeichnet, dass** die Auswahl der Quadranten derart erfolgt, dass diejenigen vier Quadranten ausgewählt werden, welche zur bestimmten aktuellen Position den geringsten Abstand aufweisen.

5. Verfahren nach einem der Ansprüche 1 bis 4, **dadurch gekennzeichnet, dass** eine Ausgabe oder Anzeige der Daten durch die Anzeigepools (22, 23, 24, 25), eine Dekodierung der Daten im Dekodierpool (21) und ein Empfang der Daten im Sammelpool (20) zeitgleich und unabhängig voneinander erfolgen.

6. Anordnung zur Verarbeitung von Informationen in einem Fahrzeugassistenz- und Informationssystem, welche eine GPS-Antenne, eine Positionsbestimmungseinheit sowie eine Quadrantauswahleinheit zur Bestimmung eines aktuellen Standorts und Quadranten umfasst, welche eine Satellitenantenne und einen Dekoder zum Empfang von Verkehrsinformationen mit ihren Ortsangaben umfasst und welche einen Filter zur Selektion der empfangenen Verkehrsinformationen mittels ihrer Ortsangaben und des bestimmten Quadranten beinhaltet, **dadurch gekennzeichnet, dass** ein Poolmanager (19) zur Steuerung eines Empfangs, einer Dekodierung und einer Anzeige der Daten vorgesehen ist, welcher mit einem Sammelpool (20) zum Empfang der Daten, einem Dekodierpool (21) zur Dekodierung der empfangenen Daten und einem Anzeigepool (22, 23, 24, 25) zur Anzeige der Daten verbunden ist.

7. Anordnung nach Anspruch 6, **dadurch gekennzeichnet, dass** der Poolmanager (19) mit vier Anzeigepools (22, 23, 24, 25) verbundenen ist, welche jeweils Daten zu einem ausgewählten Quadranten A, B, C und D beinhalten und zur Anzeige bringen.

8. Anordnung nach Anspruch 6 oder 7, **dadurch gekennzeichnet, dass** mehrere Sammelpools (20) und/oder mehrere Dekodierpools (21) mit dem Poolmanager (19) zur parallelen Verarbeitung der Daten der Quadranten verbunden sind.
